# EUROPEAN PATENT APPLICATION

(11) **EP 1 307 020 A2**
(43) Date of publication of application: **02.05.2003**
(21) Application number: 02023728.5
(22) Date of filing: 23.10.2002
(51) Int. Cl.: H04L 29/06, H04L 12/58, G06F 9/46

(54) **Composable messaging protocol**

(30) Priority: 24.10.2001 US 983555
(71) Applicant: MICROSOFT CORPORATION, Redmond, WA 98052 (US)
(72) Inventor: Christensen, Erik B., Seattle, WA 98177 (US); Layman, Andrew J., Bellevue, WA 98006 (US); Lovering, Bradford H., Seattle, WA 98119 (US); Lucco, Steven E., Bellevue, WA 98004 (US); Nielson, Henrik Frystyk, Seattle, WA 98119-3652 (US); Schewchuk, John P., Redmond, WA 98053 (US); Wahbe, Robert S., Seattle, WA 98112 (US); Kaler, Christopher G., Sammamish, WA 98074 (US)
(74) Representative: Grünecker, Kinkeldey, Stockmair & Schwanhäusser Anwaltssozietät

(57) **Abstract**

Methods and systems for using a composable network messaging protocol are disclosed. A complete set of attributes and characteristics of a messaging protocol are broken down into independent pieces, or protocolettes. When a network application (101) sends a message across the network, the network application (101) selects the set of services that are needed for that specific message (e.g., reliability). A code generator (105) composes a messaging protocol using the preconstructed protocolettes (109) , based on the network application's needs and/or request. The message is forwarded to a router (111), which transmits the message using the uniquely composed messaging protocol for delivery to the recipient(s) (115).

## Description

This application claims priority from U.S. Provisional Application serial number 60/329,796, filed October 16, 2001, U.S. Provisional Application serial number 60/346,370, filed October 19, 2001, and U.S. Patent Application serial number 09/938,555, filed October 24, 2002, each of which is herein incorporated by reference..

### FIELD OF THE INVENTION

The invention relates to computer messaging protocols. More specifically, the invention relates to a network messaging protocol where the specific protocol to transmit each message is composed of protocol building blocks based on a set of services requested by the user and/or application sending the message to another device.

### BACKGROUND OF THE INVENTION

Computer networks typically communicate by sending packets of information from one machine to another. Computers with differing hardware and/or software platforms may understand messages from other machines by communicating using a predefined message protocol. Messages are typically sent in the form of message packets using the predefined protocol. A message from one machine to another may consist of one or more message packets, depending on the size of the message and the message protocol used to deliver the message.

A typical aspect of network messaging protocols is that each protocol provides a predetermined set of services, and network applications may select the protocol to use based on the set of services that the application needs. For instance, if a network application needs to ensure that each message is received, and also that no unauthorized users can view the contents of the message, then the network application programmer or other user must select a network messaging protocol that provides both reliability and security.

Known messaging protocols, such as simple mail transfer protocol (SMTP), only provide a predetermined set of services. For example, SMTP is an unreliable, insecure, point-to-point, multiple transport, application-level protocol. That is, SMTP is unreliable at the application level, meaning that there is no mechanism built in to ensure that each message is received by the recipient (i.e., the message may be discarded and the sender might never know). Reliable transport elements must be separately added in order to ensure delivery (e.g., extending the protocol by adding message receipt processing). SMTP is not secure unless separate security is applied. Security may be added to SMTP by either extending the protocol (e.g., S/MIME) or by using transport security (e.g., IPsec). The SMTP protocol is point-to-point. An application may implement store-and-forward and routing capabilities. That is, as a message is received at a node, the message is written to memory (e.g., RAM, hard disk, etc.) and forwarded to the next node when the next node becomes available. SMTP may be used in conjunction with multiple network transport protocols, such as TCP/IP.

If a selected protocol does not provide the services needed by an application, then a second protocol may additionally or alternatively need to be used, or the selected protocol must be extended to perform the requested services. Also, when the protocol provides more services than are needed by the application, there is no means through which the extra services can be removed or filtered out. This has the potential to slow delivery time, increase CPU time and/or power, unnecessarily increases the size of each message packet or transmission, and introduce error conditions that are not relevant to the needs of the applications or web services exchanging messages.

Thus, it would be an advancement in the art to provide a network messaging protocol that composes services based on the needs of a requesting user or application program. It would be a further advancement in the art to be able to dynamically compose the messaging protocol on a message by message basis.

### BRIEF SUMMARY OF THE INVENTION

The invention may be embodied in a composable message protocol that is created by decomposing a suite of messaging services into composable protocol service modules, referred to as protocolettes. That is, distinct messaging services (e.g., reliability, security, etc.) may each be implemented in a protocolette, each of which may then be combined with other protocolettes to create a unique messaging protocol that provides the services requested by an application program or user. In this manner, a unique messaging protocol may be created for each network message so that only those resources requested by a network application or user are used.

In a first aspect of the invention, there is a method of transmitting a message using a composable messaging protocol. A router receives message data that includes characteristic information indicating a set of selected delivery characteristics for a message. The router selects code modules based on the received characteristics, and composes a message protocol using the selected code modules. The router sends the message using the constructed message protocol.

In another aspect of the invention, there is a data processing system for transmitting messages. The data processing system includes a plurality of code modules that each provide a messaging service, a module selector to dynamically select at least one code module based on input attributes which represent desired communication characteristics, and a message sender to send messages using a messaging protocol that includes the selected code module(s).

In another aspect of the invention, there is a computer readable medium that includes a plurality of code modules that each provide a messaging service, and computer readable instructions that, when executed by a processor, cause a data processing system to perform a set of steps. A code module selects at least one code module based on input attributes which represent desired communication characteristics, and a message is sent using a messaging protocol comprising the selected code module(s).

In some embodiments of the invention, each code module includes a simple object access protocol (SOAP) extension. In other embodiments, each code module includes a JavaBean.

In some embodiments, each code module is selected because it performs a desired communication characteristic.

### BRIEF DESCRIPTION OF THE DRAWINGS

Figure 1 illustrates a data flow diagram of an embodiment of the invention.

Figure 2 illustrates a method according to an embodiment of the invention.

Figure 3 illustrates a message being sent between devices that support different services, according to an embodiment of the invention.

Figure 4 illustrates a block diagram of a computer readable medium according to an embodiment of the invention.

### DETAILED DESCRIPTION OF THE INVENTION

Attributes of message services may include one or more of the following elements: routing, session control, reliability, referrals, security, identity, eventing, bindings, physical transports, capability discovery, and reference points (time, duration, types, etc.). These attributes may generally be divided into five categories: channel, topology, security, transport, and global attributes. Channel attributes include session control and reliability. Session control refers generally to the ability to define the type of connection between two machines. That is, whether the machines communicate in a packet-based manner (datagrams) or by creating a session connection between the two machines (e.g., a virtual circuit). Reliability, generally, is the ability to ensure that each message or packet is received by the recipient or, if the message is not received by the recipient, the sender will affirmatively know that the message was not received by the recipient. Reliability often includes the guarantee to deliver packets/messages in order as well as the ability to determine whether a message is delivered exactly once or at most once.

Topology attributes include routing, bindings, referrals, and eventing. Routing includes the ability of the message protocol to route messages using various end point semantics (e.g., point-to-point, routed, store & forward) as well the ability of the message protocol to traverse firewalls. Point-to-point routing refers to the need for the sender to specify each node that the message must traverse before arriving at the recipient. Routed protocols need only specify the endpoint, and the message is automatically routed at each intermediate node. Bindings include the ability of the message protocol to support multiple transports (e.g., TCP/IP and UDP/IP). Referrals refers to the ability to perform progressive discovery. Eventing refers to the ability to support synchronous communication among conversing processors based on the ability to observe and propagate events that happen in a system. The modes of communication may vary, include one-to-one and one-to-many. The kinds of eventing services also may vary, including those that have a fixed set of topics for which events will be notified to those that have an arbitrary collection of user-defined topics for which events will be defined.

Security attributes include message integrity, confidentiality, non-repudiation, encryption, authentication, and point-to-point versus end-to-end security. Message integrity ensures that the message received is identical to the message that was sent, and that the message was not altered (accidentally or intentionally) during transit. Message confidentiality refers to the ability to only allow the recipient to view the message contents. Authentication refers to the ability to ensure the identity of the sender to a reasonable degree of certainty, whereas non-repudiation refers to the ability to ensure the identity of a sender to a higher degree of certainty than authentication. That is, if a message has attribute msg.from='sam', then authentication refers to the ability of the recipient to confirm that Sam actually sent the message (as opposed to a third party such as a hacker sending the message claiming to be from Sam, commonly referred to as spoofing), whereas non-repudiation refers to the ability to prohibit the sender from claiming that she did not in fact send the message. Encryption, as is known in the art, is a method with which to ensure that only the intended recipient(s) can view the contents of the message, and may be used to accomplish confidentiality.

Point-to-point security refers to the process of securing a message for each hop in a message's path from sender to recipient. For instance, a message is sent from machine alpha to machine echo via machines bravo, charlie, and delta. Point-to-point security secures the message at alpha for bravo, at bravo for charlie, at charlie for delta, and at delta for echo. End-to-end security, on the other hand, secures the message at alpha for echo. Any intermediary machines cannot inappropriately alter or view the contents of the message.

Transport attributes include transport bindings and physical support. Physical support refers to the ability of the message protocol to support multiple transports (e.g., TCP, UDP, HTTP, SMTP, etc.). Bindings include the ability of the protocol to support various encoding methods (e.g., text and binary).

Global attributes refer to any services that should be included regardless of those services specifically requested by an application. Global services may include capability discovery and reference services. Capability discovery, generally, is the ability of a protocol to announce to a recipient node those services that the message protocol supports or includes. For instance, a message may include a list of basic services that it supports, and the receiving node may ignore those headers in the message-specific protocol that the receiving node does not also support. Reference services may include time, duration, types, and the like. For instance, a reference point may attach a specific time reference to a message that determines when the body of the message ceases to be of interest to the system and should be discarded.

Global and non-global independent protocol elements (attributes) may be combined to create any type of messaging system that is desired or needed by a network application. The individual protocol elements used are secondary to the fact that they are composable. That is, they may be integrated together without conflicts.

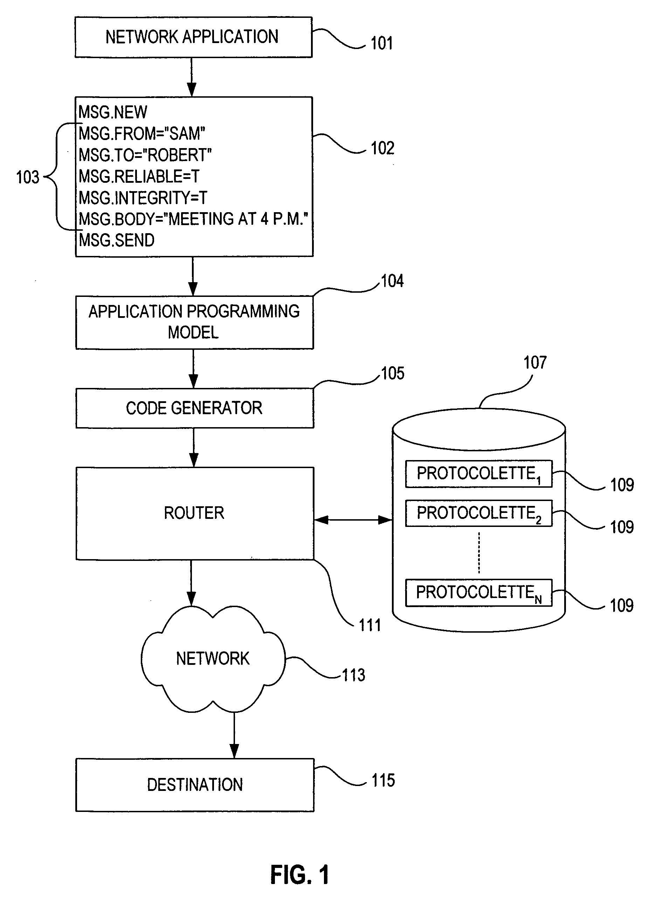

FIG. 1 illustrates a data flow diagram according to an embodiment of the invention. A network application 101 creates a new message 102, defining those services or characteristics that are needed for that specific message. For instance, in one embodiment, network application may indicate which specific protocolettes are to be used to compose the resultant message protocol. In another embodiment, the network application defines message attributes 103, which include attributes directed towards the requested message protocol characteristics (reliability and integrity), as well as attributes that are independent of the requested message protocol services (from, to, and body). That is, the characteristic of reliability indicates that sequencing and streaming session services should be used. In the present example, network application 101 specifies that message 102 should be sent using a messaging protocol that is reliable (i.e., it guarantees receipt of the message by the recipient) and maintains the message's integrity (i.e., the messaging protocol ensures that the message is not altered in transit).

Network application 101 sends message 102 through application programming model 104 to code generator 105. The application programming model may be the platform on which the network application is written. For instance, application programming model 104 may be a computer's operating system, or it may be a virtual machine, as is known in the art.

Code generator 105 parses the source message 102 and creates message tags and headers based on the requested message services and/or characteristics. Upon creating the appropriate message tags and headers, code generator 105 sends the composed message, inclusive of tags and headers, to message router 111. Message router 111 parses the composed message and determines which protocolettes 109 to use. Message router 111 retrieves the appropriate protocolettes from memory 107. Memory 107 may be a database of protocolettes, a hard disk drive, or any other data storage device or medium to which the router has access. Message router 111 composes a message-specific protocol using the selected protocolettes, and sends the message using the composed protocol to network 113 for further delivery to destination 115.

Router 111 may be any router as is known in the art that can understand a dynamically created message-specific protocol. In one embodiment of the invention, the protocolettes may be written as simple object access protocol (SOAP) extensions, and the router may be a SOAP router modified to handle dynamically created messaging protocols. SOAP is an extensible message protocol that, as defined, does not provide comprehensive network message services, but allows developers to build extensions to the protocol through which additional services may be provided. That is, the modified SOAP router may support SOAP extensions, and build a message-specific protocol based on the header information received from the code generator. In another embodiment, the protocolettes may be written in Java or a Java-based language, and the router may be a Java compliant router, as further described below.

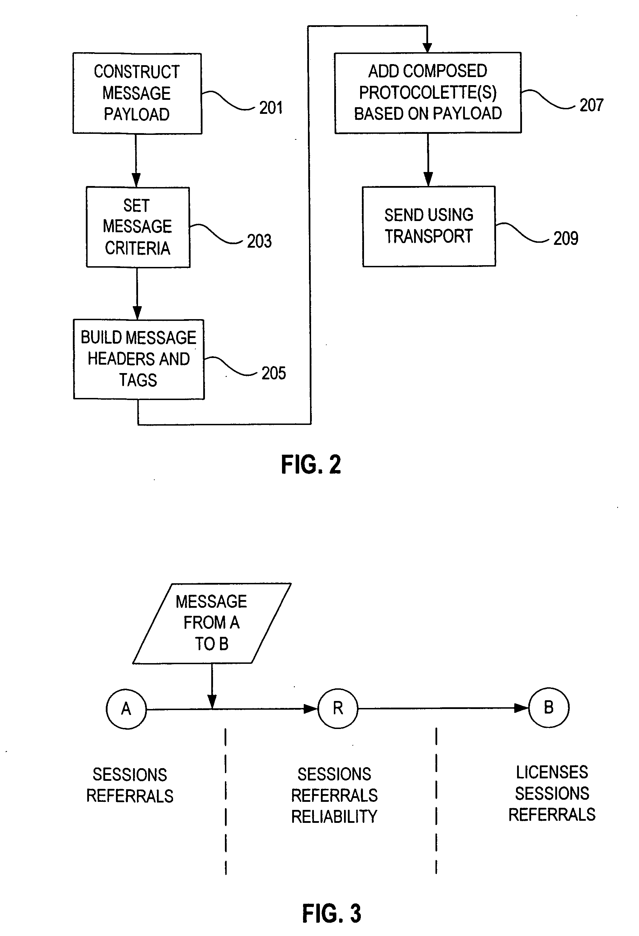

FIG. 2 illustrates a method for composing and sending messages using a composable messaging protocol according to an embodiment of the invention. First, in step 201, a network application or other message constructor constructs a message payload. The message payload includes the user or application data. In step 203, the network application sets the message criteria, e.g., in response to a user's request for selected services and/or characteristics. That is, the network application includes in each message an indication of those services and/or characteristics requested by the network application (or a user) generating the message.

In step 205 a code generator creates protocol headers and tags based on the selected services/characteristics, and encapsulates the message payload with the newly created headers and tags. In step 207, after receiving the encapsulated message, a router composes a unique messaging protocol by selecting protocolettes that, when combined, provide the messaging services and/or characteristics requested, based on the message criteria. The router may select protocolettes based on a one to one mapping of the selected services/characteristics to protocolettes. Alternatively, the code generator may select protocolettes based on a mapping table that instructs the code generator to select specific protocolettes based on the selected services/characteristics. For example, when an application requests a secure, reliable message dialog, the mapping table may indicate that authentication, integrity, confidentiality, session, time markers, and sequencing protocolettes should be used over any available reliable transport. After composing the unique messaging protocol, the router transmits the message for delivery to a recipient in step 209.

In one embodiment, the code generator composes the message-specific protocol by combining protocolettes (or JavaBeans, as discussed below). In another embodiment of the invention, the code generator composes a unique message header (in addition to the required header in the message payload created in step 201) that includes information for each of the selected services. The code generator may send the message payload and unique message header to a router. The router, based on the unique header information, composes the message-specific protocol from protocolettes stored in memory (e.g., hard disk, RAM, etc.).

Individual protocolettes may be created for each of the above message protocol attributes. That is, there may be one protocolette for binding, another for eventing, and so forth. Protocolettes may also be created or selected based on a composite request. For instance, providing reliability requires sequencing message packets and the use of a streamed session (e.g., a virtual circuit). Thus, when a message requests reliability, the code generator may automatically select a stream session protocolette and a sequencing protocolette. Alternatively, there may be a reliability protocolette that contains logic for performing both sequencing and streamed sessions. The same holds true with respect to other combinations of attributes, based on user and system needs and requirements.

Other protocolettes may be created in addition to or instead of the above-referenced attributes. In one embodiment of the invention, a protocolette is created for at least each of the following components (with protocolette module title): capabilities (ACCEPT), agreements (AP), eventing & notification (EN), licenses (LIC), referrals (REF), reliable messaging (RM), routing (RP), security (SEC), session management (SESSIONS), and message time markers (TIME). Each component may define standard tags and headers that define the service(s) provided by that component.

The capabilities component (ACCEPT) may specify a method for a sender of a message (either the initiator or the respondent of an interaction) to include a list of basic capabilities that it supports. In one embodiment this may be a list of URIs (or URLs) that reference predefined sets of properties required for the message exchange to be successful. That is, the set may indicate the capabilities that the sender of a message supports. In one embodiment, this may be a set of predetermined or predefined protocolettes that the sender of the message can understand. In another embodiment, separate lists may be provided for each of the protcolettes that the sender of the message can support. In yet another embodiment, an expressive language with Boolean and other conditions (for example time ranges) may be specified. In some embodiments, XML may be used to perform the above-recited functions.

The transactional agreement component (AP) may specify a method for a set of participants to agree on the transaction outcome of their multi-party computation. In one embodiment this agreement may be achieved using traditional two-phase commit protocols, as are known in the art. In another embodiment the agreement includes support for computers that disconnect from the network for arbitrary but understood periods of time. In yet another embodiment the agreement includes mechanisms for participants to support the use of compensating or canceling actions.

The eventing and notification component (EN) may specify methods for components that send and receive messages to advertise topics of interest, for components to register for event notifications in the topics of their interest, and for a service to deliver event notifications to the subscribers of a topic. This component treats publishers of event notifications and subscribers to topics as independent senders and receivers of messages. One of its functions is to allow the asynchronous communication of relevant information triggered by changes in state between independent processes. In one embodiment there may be a centralized location where all the topics are publicized. It is at this location that all subscriber requests are received. In another embodiment there may be an overlay network of service -components where the topics are administered. A subscriber may request a subscription at any one of these service components.

The licenses component (LIC) may provide a mechanism for passing specific security credential formats. In one embodiment, the credential is passed as binary information. In another, it may be passed as semantic XML. In a third embodiment it may be a combination of the two. The licenses component may defines tags to use for encoding known license formats and a tag to use when passing arbitrary binary credentials.

The referrals component (REF) enables senders and receivers of messages to acquire information of the location of services and obtain accelerated routing to these locations. The central triggering information is the action that is to be performed by the message. Such action, arbitrary in nature, may be codified as part of the standard envelope information of messages. In one embodiment the referrals service is built in conjunction with a naming and routing service. Its operation may include adding information to or changing information in the "return address" and "forward address" of messages that are being transmitted between a source and a destination. For example, if the referrals component has the information that a service S that operates on the action A is known to be at location L, then messages directed to the name N with such action A may be immediately directed to location L by use of the referral service.

In another example, with reference to FIG. 3, A sends a message to B through network node R. Beyond any default services, A might only understand referrals and sessions. When node R receives the message, R may detect that A understands referrals, and R may respond to A by informing A that R referred the message to B. Thus, the next time A sends a message to B, A may be able to send the message-directly to B without going through R. B may additionally support licenses, and detect that A's message does not contain a proper license. B may return an error message to A, indicating the license capabilities that B supports. A may later resend the message with the proper license, if applicable.

In one embodiment of the invention, the referrals component may use headers and tags for inserting, deleting, and querying routing entries in a router. The referrals component may provide the mechanisms through which applications can insert, delete, and query routing entries in a router through the exchange of referral information.

The reliable messaging component (RM) provides for the reliable exchange of messages between senders and receivers that may or may not be active at the same time or may or may not be in the same machine. The message lifetime, thus, may exceed that of the sender and/or the receiver. In one embodiment this service may have components with durable storage in the same machines in which the sender is located and in which the receiver is located. These components may store and forward messages among them. In another embodiment, the component that stores and forwards messages may be in neither of the machines where the sender or the receiver is located. It is thus possible for senders and receivers that do not desire to allocate local storage but want to support reliable messaging to participate in the reliable delivery of messages between them.

The routing component (RP) provides senders and receivers of messages with routing information that aids in the delivery of messages. In one embodiment this aid is based on tracking which intermediary nodes were used by a message to arrive at a given destination. The knowledge about these intermediate nodes may then be used to find more efficient routes to return a message to a source as well as to prevent cycles in the delivery of messages. In one embodiment the routing component adds host information during the delivery of messages to the header of each message. This host information may then be used to determine the paths through the interconnected system that were taken by the message. When returning routes are desired this host information may be used to find more efficient routes.

The security component (SEC) may provide a mechanism for message integrity and confidentiality, and for transmission of security credentials. In one embodiment multiple tags may be used. In another embodiment, a single tag may be used with a URI reference. In yet another embodiment, XML Signatures and XML Encryption may be used. In still another embodiment, customer formats may be independently specified. For example, a credentials header may provide a container for passing security credentials in a network message. There may be multiple credentials within this header, and each tag within the header may identify the type of data it contains.

The security module may also define and use an integrity header. Message senders may want to enable message receivers to determine whether a message was altered in transit and to verify that a message was sent by a particular license owner. The integrity mechanism may allow for a message or a portion of a message to be signed using XML signatures. The integrity mechanism enables the integrity of the message (or selected portions) to be determined. When used in conjunction with the credentials tag, the license of a message signer may be correlated and a mapping made between the assertions of the license and the message as evaluated by an application.

The security module may also provide encryption capabilities. Message senders may want to ensure that a message or parts of a message remain confidential. When a message requires confidentiality, the sender of the message may encrypt those portions of the message that are to be kept private using XML Encryption.

The session management component (SESSIONS) provides a mechanism for issuing commands about a shared context. Such commands include, but are not limited to, initiation, termination, confirmation, and caching. In one embodiment these commands may be specified as separate tags. In another embodiment, the commands may be specified as a single tag with a URI. Initiation may include a timeout. Confirmation typically references a specific command or action that was requested.

Caching may include a specification from one party to another of its expectations about what is cached for the session. In one embodiment this may be a list of URIs. In another embodiment, it may be references to other tags. In still another embodiment, it may be separate tags that define the semantics of the caching operation.

The message time markers component (TIME) may provide a mechanism for attaching specific time references to a message. The TIME module provides a consistent way to reference time markers across the composable protocolettes. Time references may be used in the creation and maintenance of sessions, sequencing, event notification, licenses, and other time-based elements. In one embodiment there may be individual tags for each reference. In another embodiment, a single tag with a URI may be used. In some embodiments, attributes or tags may be used to denote time formats, while other embodiments might have specific time formats.

When the inventive composable messaging protocol is used throughout a network, various machines, devices, and/or nodes in the network may communicate with each other and work out interoperability intersections using the protocol's global capability discovery attribute. However, one of skill in the art will recognize that capability discovery, as well as other attributes, are optional. A messaging protocol may function properly without a capability discovery attribute (or any other attribute). However, the composable messaging protocol is more robust and adaptable when a complete set of attributes are included in the way of protocolettes.

The inventive composable messaging protocol may be used, for instance, to provide web-based services across multiple platforms, using SOAP extensions to provide reliability, security, etc. Because SOAP is a platform independent protocol, so are the SOAP extensions. Thus, the composable messaging protocol is also platform independent, and web services may be enabled to be interoperable across any platform that supports SOAP. In another embodiment of the invention, each protocolette may be created using direct internet message encapsulation (DIME), a binary encoding of messages independent of transport. For example, in one embodiment, a DIME message may encapsulate a SOAP message.

In another embodiment of the invention, each protocolette may be created using Java or one of its many derivative languages (i.e., JavaScript, JavaBeans, etc). Each protocolette may be an independent JavaBean, or other Java-based module, configured to perform one or more of the selectable protocol attributes as the module is executed in a Java Runtime Environment or Java Virtual Machine. In this embodiment, the router may be a Java compliant router that incorporates the Java modules (e.g., JavaBeans) as necessary to send the message with the requested services.

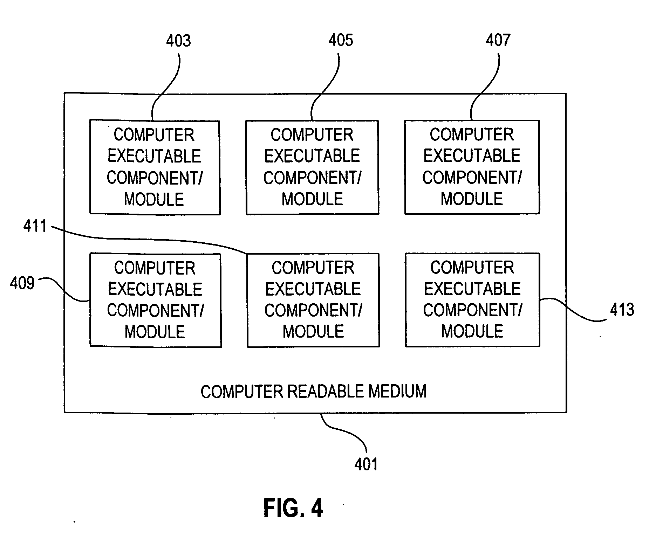

The inventive methods may be embodied as computer readable instructions stored on a computer readable medium such as a floppy disk, CD-ROM, removable storage device, hard disk, system memory, or other data storage medium. Fig. 4 illustrates a block diagram of a computer readable medium 401 that may be used in accordance with one or more of the above-described embodiments. The computer readable medium 401 stores computer executable components, or software modules, 403-413. For instance, each protocolette may be stored in a unique software module. More or fewer software modules may alternatively be used. Each component may be an executable program, a data link library, a configuration file, a database, a graphical image, a binary data file, a text data file, an object file, a source code file, or the like. In one embodiment, data link libraries may be constructed using universal runtime (URT), available from Microsoft Corporation of Redmond, Washington. When one or more computer processors execute one or more of the software modules, the software modules interact to cause one or more computer systems to perform according to the teachings of the present invention.

While the invention has been described with respect to specific examples including presently preferred modes of carrying out the invention, those skilled in the art will appreciate that there are numerous variations and permutations of the above described systems and techniques that fall within the spirit and scope of the invention as set forth in the appended claims.

## Claims

1. A method of transmitting a message using a composable messaging protocol, comprising the steps of:
(i) receiving message data comprising characteristic information that indicates a selected set of delivery characteristics for a message;
(ii) selecting code modules based on the received characteristics;
(iii) composing a message protocol comprising the selected code modules; and
(iv) sending the message using the constructed message protocol.

2. The method of claim 1, wherein each code module provides a service associated with at least one of the selected attributes.

3. The method of claim 1, wherein, in steps (ii) and (iii), each selected code module comprises source code written in a Java-based language.

4. The method of claim 1, wherein, in steps (ii) and (iii), each selected code module comprises a data link library.

5. The method of claim 1, wherein, in step (ii), modules are selected that perform the selected attributes.

6. The method of claim 1, wherein, in step (ii), the selected code modules comprise a sessions code module that indicates whether the message is sent using packets or streams.

7. The method of claim 1, wherein, in step (ii), the selected code modules comprise a reliability code module that ensures that packets are received by the recipient.

8. The method of claim 1, wherein, in step (ii), the selected code modules comprise a referrals code module that, when a message is forwarded to another node, informs a sending node of the machine to which the message was forwarded.

9. The method of claim I, wherein, in step (ii), the selected code modules comprise a referrals code module that performs progressive discovery.

10. The method of claim 1, wherein, in step (ii), the selected code modules comprise a capabilities code module that performs capability discovery as the message progresses from sender to recipient.

11. The method of claim 1, wherein, in step (ii), the selected code modules comprise a security code module that performs at least one of integrity, encryption, and authentication.

12. The method of claim 1, wherein, in step (ii), the selected code modules comprise a transport code module that specifies a message transport protocol.

13. The method of claim 1, wherein, in step (ii), the selected code modules comprise a bindings code module that specifies whether the message is sent in text or binary format.

14. The method of claim 4, wherein the data link library comprises URT technology.

15. The method of claim 1, wherein step (i) comprises receiving the message data from a code generator.

16. The method of claim 1, wherein, in step (i), the received message data is based on user input.

17. A data processing system for transmitting messages, comprising:
a plurality of code modules that each provide a messaging service;
a module selector to dynamically select at least one code module based on input attributes which represent desired communication characteristics; and
a message sender to send messages using a messaging protocol comprising the selected code module(s).

18. The data processing system of claim 17, wherein each code module comprises source code written in a Java-based language.

19. The data processing system of claim 17, wherein each code module comprises a data link library.

20. The data processing system of claim 17, wherein the module selector selects code modules that perform the desired communications characteristics.

21. The data processing system of claim 17, wherein the at least one code module comprises a sessions code module that indicates whether the message is transmitted using packets or streams.

22. The data processing system of claim 17, wherein the at least one code module comprises a reliability code module that ensures that packets are received by the recipient.

23. The data processing system of claim 17, wherein the at least one code module comprises a referrals code module that, when a message is forwarded to another node, informs a sending node of the machine to which the message was forwarded.

24. The data processing system of claim 17, wherein the at least one code module comprises a referrals code module that performs progressive discovery.

25. The data processing system of claim 17, wherein the at least one code module comprises a capabilities code module that performs capability discovery as the message progresses from sender to recipient.

26. The data processing system of claim 17, wherein the at least one code module comprises a security code module that performs at least one of integrity, encryption, and authentication.

27. The data processing system of claim 17, wherein the at least one code module comprises a transport code module that specifies a message transport protocol.

28. The data processing system of claim 17, wherein the at least one code module comprises a bindings code module that specifies whether the message is sent in text or binary format.

29. The data processing system of claim 19, wherein the data link library comprises URT technology.

30. A computer readable medium comprising:
a plurality of code modules that each provide a messaging service;
computer readable instructions that, when executed by a processor, cause a data processing system to perform the steps of:
(i) selecting at least one code module based on input attributes which represent desired communication characteristics; and
(ii) sending a message using a messaging protocol comprising the selected code module(s).

31. The computer readable medium of claim 30, wherein each code module comprises source code written in a Java-based language.

32. The computer readable medium of claim 30, wherein each code module comprises a data link library.

33. The computer readable medium of claim 30, wherein, in step (i), code modules that perform the desired communication characteristics are selected.

34. The computer readable medium of claim 30, wherein the at least one code module comprises a sessions code module that indicates whether the message is transmitted using packets or streams.

35. The computer readable medium of claim 30, wherein the at least one code module comprises a reliability code module that ensures that packets are received by the recipient.

36. The computer readable medium of claim 30, wherein the at least one code module comprises a referrals code module that, when a message is forwarded to another node, informs a sending node of the machine to which the message was forwarded.

37. The computer readable medium of claim 30, wherein the at least one code module comprises a referrals code module that performs progressive discovery.

38. The computer readable medium of claim 30, wherein the at least one code module comprises a capabilities code module that performs capability discovery as the message progresses from sender to recipient.

39. The computer readable medium of claim 30, wherein the at least one code module comprises a security code module that performs at least one of integrity, encryption, and authentication.

40. The computer readable medium of claim 30, wherein the at least one code module comprises a transport code module that specifies a message transport protocol.

41. The computer readable medium of claim 30, wherein the at least one code module comprises a bindings code module that specifies whether the message is sent in text or binary format.

42. The computer readable medium of claim 32, wherein the data link library comprises URT technology.
